# EUROPEAN PATENT SPECIFICATION

(11) **EP 2 371 249 B1**
(45) Date of publication and mention of the grant of the patent: **20.02.2013**
(21) Application number: 11160889.9
(22) Date of filing: 01.04.2011
(51) Int. Cl.: A47J 37/07

(54) **Barbecue**
Grill
Barbecue

(30) Priority: 01.04.2010 GB 201005554; 01.04.2010 GB 201005555
(43) Date of publication of application: 05.10.2011
(73) Proprietor: O'Connell, Joseph, Wicklow (IE); O'Connell, Stewart, Wicklow (IE)
(72) Inventor: O'Connell, Joseph, Wicklow (IE); O'Connell, Stewart, Wicklow (IE)
(74) Representative: Moore, Barry

(56) References cited:
- WO-A1-2004/072539
- US-A- 4 598 693
- US-A- 4 729 364
- US-A- 5 088 470
- US-A- 6 142 143
- US-A1- 2009 165 771

## Description

### Field

The invention relates to barbecues and in particular to gas fuelled barbecues

### Background

With the growth in the enjoyment of the outdoors more and more people are turning to their gardens and using them as an outdoor room.

The use of gas fuelled barbecues which are used to cook in the outdoors is well known. Such barbecues typically provide a housing having a base portion within which the burner elements are located. A grill is provided over the burner and food is then cooked on that grill.

Typically such barbecues also employ a hood may be pivotably opened to provide access to the grill. As the barbecue is used outdoors and to ensure adequate and efficient cooking this hood is typically provided in a closed configuration so as to maintain the heat generated by the burner elements within the environment of the food. However, it is also important to ensure that the food is cooking properly, which has traditionally required a repeated opening of the hood. This results in the loss of heat each time the hood is opened, thereby delaying the cooking process.

To address this problem it has been known to provide a window in the hood to allow the user to view the food cooking without having to open the hood. However problems associated with use of such a window include the fact that over extended use of the barbecue the window may be come stained or otherwise dirtied thereby reducing the visibility through to the food. This typically arises because the window is in close proximity to the vapours emitted by the food and any spitting during the cooking process. Over extended periods this staining may be such as to make the window non-transparent.

There is therefore a continued need to allow a user to view the food cooking without having to open the hood.

Additionally, typically gas barbecues of the type described generally above (with or without a window) provide first and second side panels on either side of the cooking portion of the barbecue, the side panels use providing an accessory surface for a user to utilise during the cooking process. The side panels by their nature project some distance either side of the barbecue main housing and as such increase the overall footprint of the barbecue. From a user point of view, large side panels or trays are beneficial as they provide more work space (which can be limited outside in a garden). However, for winter storage these side trays mean the space needed to store the barbecue is considerably bigger.

Customer have resorted to partially disassembling there BBQ during the winter which is not ideal and other manufacturers have created hinged side trays which fold down. These can be difficult to fold, unsteady when in the upright position and over elaborate for the purpose and also deteriorate over years of use.

WO2004072539 for example relates to a support or trolley for a barbecue or other article to which side tables may be assembled. The side tables are assembled to the upright members of the support or trolley.

Typically these barbecues are provided in flat pack or similar deconstructed form and the user is obliged to assemble the barbecue on receipt. By providing the deconstructed transport form, it is possible to reduce shipping costs and also allows the user to fit a barbecue in a conventional vehicle for transport from the shop to their home. If these side panels are integrally formed with the barbecue cooking portion, the dimensions of the deconstructed form are quite large. It is therefore desirable to have the side panels provided as separate elements and oblige the user to assemble them on receipt.

However a problem with this arises from the area available to the user in the region where the panels are to be coupled. This is quite small and provides restrictive access for coupling screws and the like to effect a secure inter-engagement between the panels and the cooking portion. However a secure inter-engagement is desirable as often the side panels are used for moving the barbecue around the garden or patio area and it is important that the panels do not become separated from the barbecue during such usage. There are therefore a number of problems associated with assembling side panels to a cooking portion of a barbecue.

Accordingly, there is a need for an improved BBQ.

### Summary

The present invention provides a BBQ as defined in the independent claim, which follow, with further advantageous features being provided in the dependent claims.

In a first aspect, the present invention may provide a bottle gas fuelled barbecue comprising: a sink within which a gas burner is located, a hood co-operable with the sink to define a cooking volume within which food may be cooked and wherein the hood comprises a window, the window operably allowing a viewing of cooking food within the cooking volume, the barbecue further comprising means for providing a flow of air along an inside surface of the hood proximal to the window, the flow or air creating an air wash effect against the window. The hood and sink may operably meet at a front portion of the barbecue, the means for providing a flow of air comprises an air access point provided at that front portion. In which case, the hood or sink may optionally define a plurality of vents at the front portion to allow an ingress of air into the cooking volume. Similarly, the hood may project forwardly of the sink at the front portion of the barbecue so as to provide an air gap between the two in this region. Suitably, the hood may comprise at least one vent in an upper region thereof, to allow an escape of air out from the cooking volume. The hood and window may each comprise a curved surface

The window may be coupled to the hood using an elastomeric sealant to prevent escape of air out through any gaps between surfaces of the hood and the window.

In a second aspect, a bottle gas fuelled barbecue is provided comprising: a main body portion housing a sink within which a gas burner is located, first and second side trays removably coupled to the main body portion; a coupling mechanism facilitating the removable coupling of the side trays to the main body portion and wherein the coupling mechanism comprises projecting engagement members extending downwardly from the side trays, the engagement members being configured to cooperate with corresponding receiving members provided on or proximal to the main body portion.

The projecting members are male members, with the receiving members defining co-operating female members within which the male members are received. The length of the male members may be greater than the length of the female members such that on inter-engagement, the male members project through the female members. Each of the male and female members are be angled inwardly towards the cooking portion, the female member is angled so as to be substantially parallel with a side wall of the sink.

The coupling mechanism is be configured such that operably separation of the trays from the main body portion requires a lifting of the trays upwardly to align the engagement members with the receiving members.

These and other features of the present invention will be better understood with reference to the following drawings.

### Brief description of the drawings

Figure 1 is a perspective view from the front of portion of a barbecue according to a first aspect of the invention;
Figure 2 is a perspective view from the front of portion of a barbecue according to a second aspect of the invention and is effectively the same as Figure 1 without illustration of the airwash;
Figure 3 is a perspective view from below of a side tray for the BBQ provided in accordance with the present teaching;
Figure 4 is a perspective view of the side of a cooking portion of a barbecue in accordance with the present teaching; and
Figure 5 is a perspective view showing a presentation of the side tray to the side of the cooking portion for inter-engagement of the male and female engagement members.

### Detailed description of the drawings

The application will now be described with reference to an exemplary implementation which is provided to illustrate the type of structure that may be provided in accordance with the teachings of the invention and is not intended to limit the invention in any way except as may be deemed necessary in the light of the appended claims.

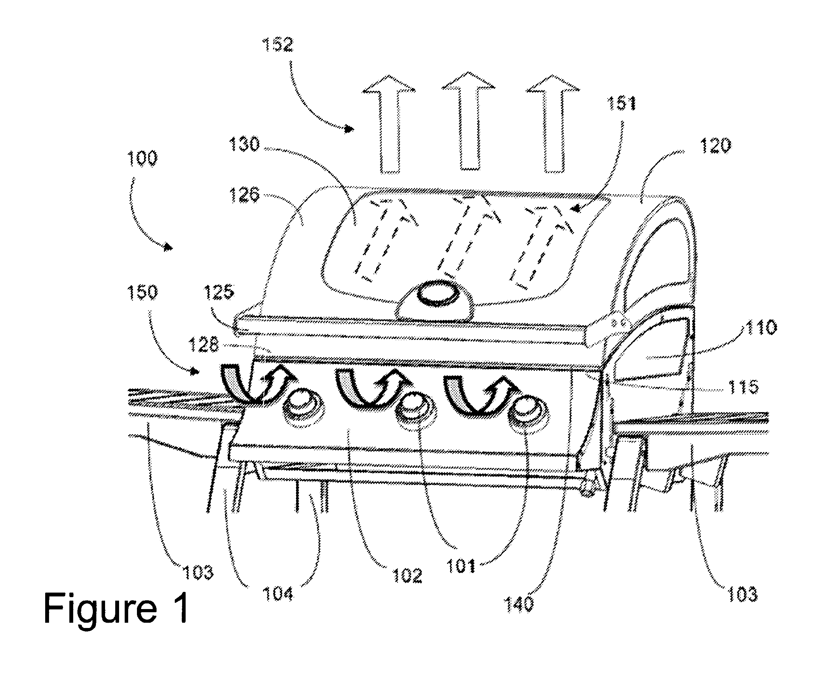

Figure 1 shows an upper portion of a barbecue 100 in accordance with the present teaching. Other components of the barbecue are as will be appreciated by those of skill in the art and are not all shown. The cooking portion includes a sink 110 within which at least one burner element is be provided. The burner is configured, in use, to be in fluid communication with a bottle of gas through the use of rubber tubing connecting the burner with the gas supply, as will be appreciated by those skilled in the art. Control of the flow of gas from the bottle to the burner is provided by a control knob 101 located on an exterior face 102 of the cooking portion. Two side panels 103 are provided on either side of the cooking portion and in use provide accessory surfaces for a user to utilise during the cooking process. The side panels are desirably removably mountable to the barbecue. The cooking portion is mounted on a plurality of legs 104.

A hood 120 is pivotably mounted to the sink. The hood has a handle 125 that allows a user to lift the hood upwardly and pivot it towards the rear of the barbecue to provide access to an interior volume of the barbecue where a grill is located on which food may be placed and cooked.

In this exemplary configuration the hood is provided having a curved top surface 126 within which a window 130 is provided. The window is desirably mounted to an interior surface of the hood using for example a combination of formed brackets within the hood structure and/or elastomeric sealants. The window needs to be fabricated using a heat resistant material such as tempered glass or a heat resistant plastic material and is suitably a solid single piece construction. Similarly, the means for securing the window to the hood needs to be capable of withstanding the temperatures that will be operationally encountered within the interior of the barbecue. By using a sealant it is possible to obviate any gas escaping between the edge formed by the window and the hood. Similarly, by using a single piece construction, there are no apertures or gaps in the window to allow gas escape through the window as might exist in a multi piece construction thus ensuring good heat retention.

The window is desirably also curved to allow it to adopt the contours of the curved hood. The use of a flexible sealant to secure the window to the hood is also advantageous in that it allows for compensation in any mis-match in the curved form of the window and the hood.

The curved viewing window 130 allows the barbecue user to see the progress of their food cooking while keeping the hood in the down position, thus maintaining the BBQ roasting effect. To address problems associated with previous attempts to provide windows including complaints that the window gets greasy and dirty very quickly and is unattractive and ineffective as it cannot be seen through, the present inventors have configured the barbecue to provide an air-wash system which directs air over an interior surface of the window thereby preventing contact of the window with the grease and other dirt elements that are generated during cooking.

In accordance with the present teaching incorporation of an air-wash system provides for a manipulation of a flow of air to keep the smoke and grease created by the barbecuing away from the window.

As shown in Figure 1, an air-gap 140 is provided between a lower front surface 128 of the hood 120 and an upper front surface 115 of the sink 110. This air-gap may be provided by having the hood project forwardly of the sink or by providing one or more vents in this region to allow air to enter into the interior volume of the barbecue. The lower front surface 128 is substantially level with the grill within the barbecue sink and by providing an air-gap in this location between the front of the hood and the sink air 150 is drawn into the barbecue cooking volume. It will be appreciated that this draw of air is accentuated by the hot air within the barbecue resultant from the cooking process.

The cold air 150 that is drawn in through the air gap is forced along the interior surface of the hood and passes proximal to the window. This passage of air 151 past the window 130 provides a screen of air 151 rushing along the inside of the hood/window that prevents the smoke from the barbecue tarnishing it and in effect keeps the window clean and clear.

The air then passes out of the top of the hood 120 through one or more vents (not shown, air flow indicated by arrows) provided in the upper rear surface of the hood. These vents provide a dual function in that they allow the cooking emissions to exit but also define the exit chimney of the air wash and out the back at the top vents. Again, the hot air inside the barbecue body operably forces the air-wash air along the top of the hood and out the vents at the back where it exits upwardly as an air stream 152.

As has been described already the hood is configured to be moveable to cover the cooking portion. Such movement of the hood may be achieved, as discussed previously by the use of hinges or could for example be a completely removable item that is placed separately from the barbecue when not required. The hood may further include a second grill which can be used to store food before and after the cooking process. The inclusion of vents in the top of the hood provides a dual function in that they allow the cooking emissions to exit but also define the exit chimney of the air wash. Thus, the air screen prevents any accumulation of drippings on the underside of the hood and obviates the requirement for a deflector which are a feature in some prior art BBQs.

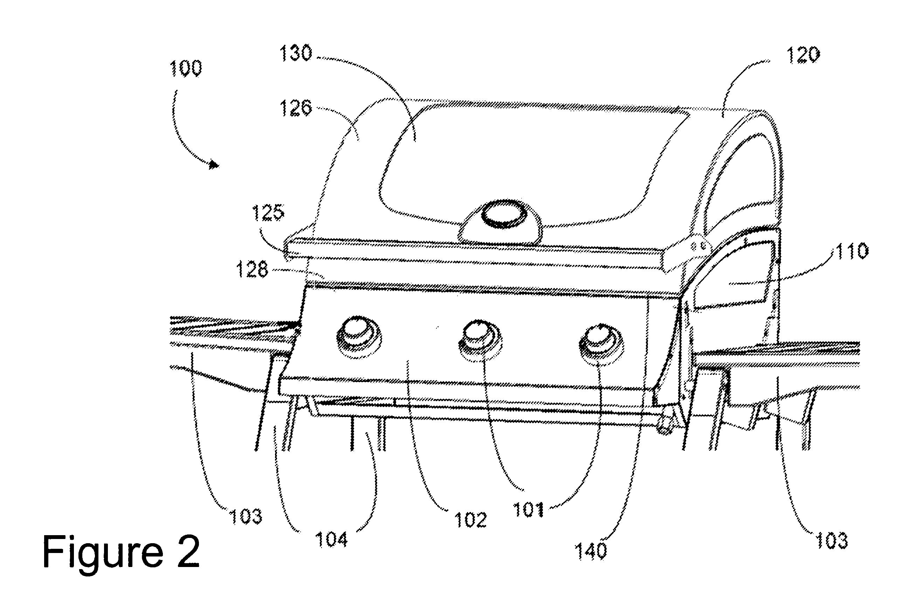

An implementation of a second aspect of the invention is shown in Figure 2. This second aspect of the invention may or may not include the airwash system of the first aspect of the invention described above with respect to Figure 1 and for convenience references to which have been omitted. As with Figure 1, Figure 2 shows an upper cooking portion of a barbecue 100 in accordance with the present teaching. As above, other components of the barbecue are not all shown as will be appreciated by those of skill in the art. The cooking portion includes a sink 110 within which at least one burner element may be provided. The burner is configured, in use, to be in fluid communication with a bottle of gas through the use of rubber tubing connecting the burner with the gas supply, as will be appreciated by those skilled in the art. Control of the flow of gas from the bottle to the burner is provided by a control knob 101 located on an exterior face 102 of the cooking portion. Two side panels 103 are provided on either side of the cooking portion and in use provide accessory surfaces for a user to utilise during the cooking process. The side panels are removably mountable to the barbecue. The cooking portion is mounted on a plurality of legs 104.

A hood 120 is pivotably mounted to the sink. The hood has a handle 125 that allows a user to lift the hood upwardly and pivot it towards the rear of the barbecue to provide access to an interior volume of the barbecue where a grill is located on which food may be placed and cooked.

In this exemplary configuration the hood is provided having a curved top surface 126 within which a window 130 is provided. The window is desirably mounted to an interior surface of the hood using for example a combination of formed brackets within the hood structure and/or elastomeric sealants. The window needs to be fabricated using a heat resistant material such as tempered glass or a heat resistant plastic material. Similarly, the means for securing the window to the hood needs to be capable of withstanding the temperatures that will be operationally encountered within the interior of the barbecue. By using a sealant it is possible to obviate any gas escaping between the edge formed by the window and the hood.

The window is desirably also curved to allow it to adopt the contours of the curved hood. The use of a flexible sealant to secure the window to the hood is also advantageous in that it allows for compensation in any mis-match in the curved form of the window and the hood.

The curved viewing window 130 allows the barbecue user to see the progress of their food cooking while keeping the hood in the down position, thus maintaining the BBQ roasting effect.

As has been described already the hood is configured to be moveable to cover the cooking portion. Such movement of the hood may be achieved, as discussed previously by the use of hinges or could for example be a completely removable item that is placed separately from the barbecue when not required. The hood may further include a second grill which can be used to store food before and after the cooking process.

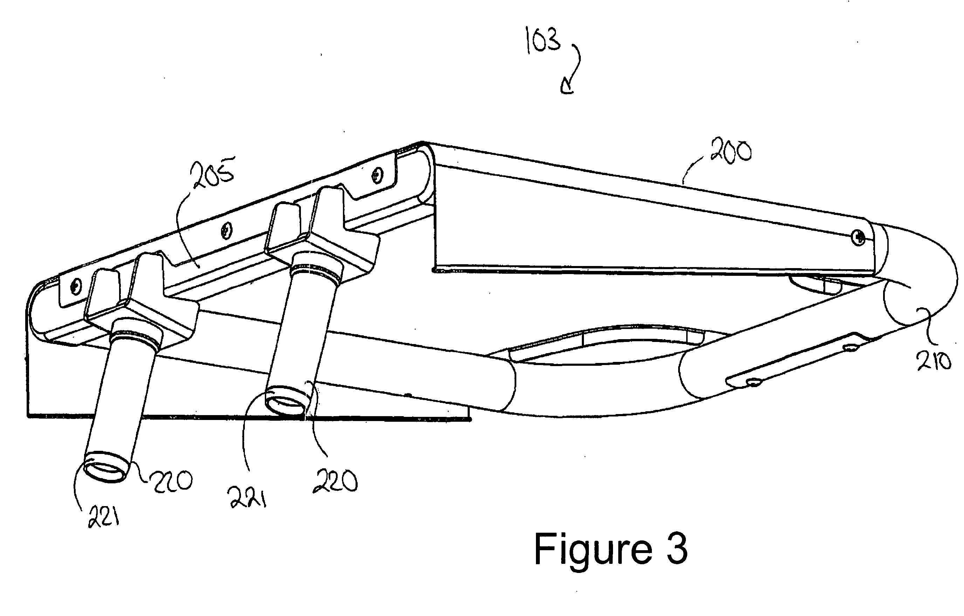

Figure 3 is a perspective view from below of one of the two side trays that were shown in Figure 2 as being coupled to the cooking portion. Each of the side trays are desirably identical, albeit mirror images of one another as they are coupled to alternative sides of the barbecue cooking portion. The side trays comprise a planar top surface 200 on which food or utensils may be rested during the cooking process. In this exemplary configuration the planar surface is supported on a tubular ring support 210 that extends substantially about the perimeter of the tray. It will be appreciated however that such specifics are exemplary of the type of structure that could be used to provide the side tray.

First and second projecting engagement members 220 are provided extending downwardly from the side panel. The engagement members are configured to cooperate with corresponding receiving members provided on or proximal to the barbecue cooking portion as will be discussed below. The projecting members are provided adjacent to an inner side 205 of the side tray and project a distance below the side tray. In this exemplary arrangement each of the projecting members are substantially tubular and are provided with a tapered end portion 221 to allow for ease of presentation into the corresponding receiving members. The engagement members are angularly offset from the perpendicular in that they do not project straight down from the planar upper surface 200 of the side tray. The angle is desirably one that effect a projection of the engagement members inwardly, typically at an angle of about 30 degrees.

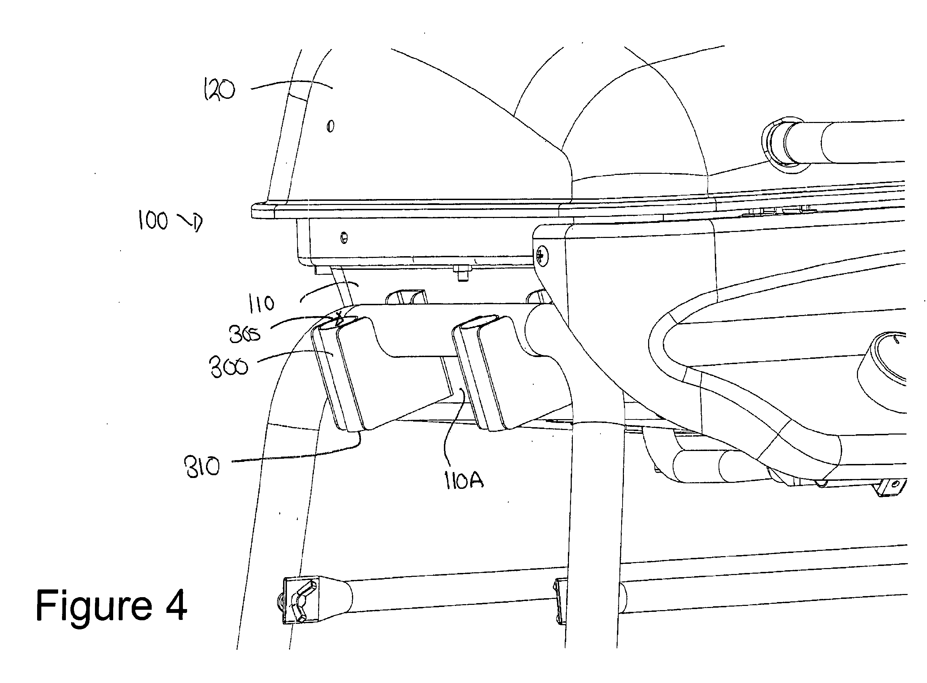

Figure 4 shows corresponding receiving members 300 provided, in this instance, on a sink 110 of the barbecue cooking portion. The receiving members 300 are provided in the form of tubular female receiving brackets which are fixed to the body of the sink 110 within the cooking portion. The receiving members are also angularly offset from the perpendicular. The angle is desirably approximate to the angle of the side wall 110A of the sink 110.

The receiving members 300 are dimensioned to receive the tubular form of the male engagement members 220. The length of the engagement members 220 is desirably greater than the length of the receiving brackets 300.

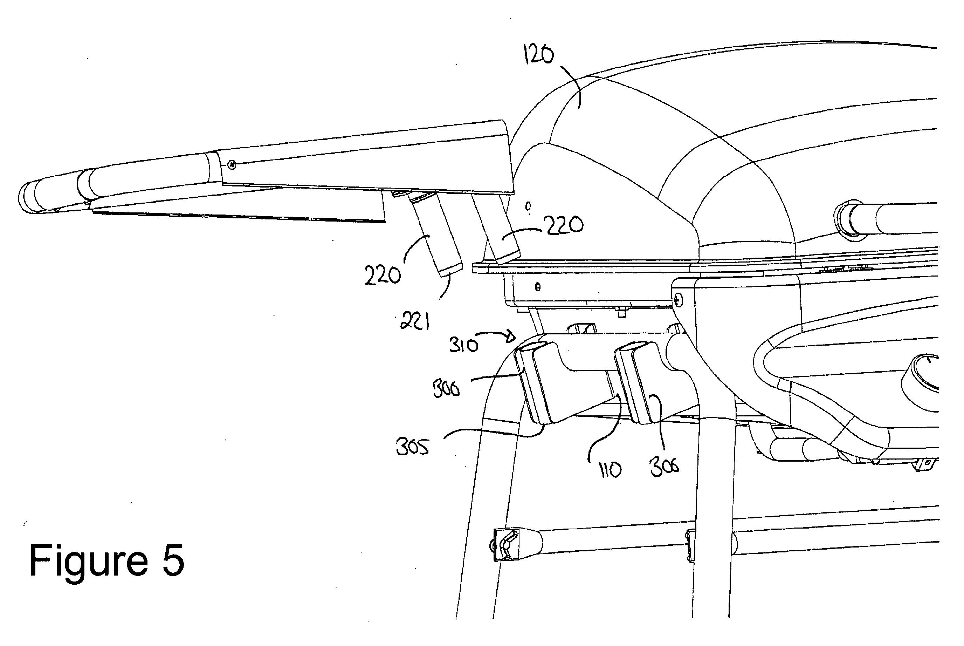

As shown in Figure 5, inter-engagement is provided by presentation of the end portion 221 of the male members 220 towards an open mouth 305 of the corresponding female member. The male member will then slideably engage with the female member and extend or project beyond the bottom 310 of the female member. Such inter-engagement makes this stage of assembly very easy and removing the side trays for storage or transportation on smaller, camping orientated barbecues much easier.

It will be understood that by having the coupling mechanism offset from the perpendicular that any force directly downwardly on the upper surfaces 200 of the side trays will effect a biasing of the male member inwardly towards the sink 110 thereby increasing the resistance to separation of the tray from the cooking portion. To remove the side tray, it is necessary to initially lift the side tray upwardly to provide the necessary planar separation path between each of the male and female parts.

It will be understood that what has been described herein are exemplary embodiments of a gas fuelled barbecue. By providing an air wash system within the hood it is possible to prevent build up of dirt and grease on a window provided within the hood. As a result of this reduction in the grease, it is therefore possible to view food cooking through the window for longer periods without having to repeatedly clean the window. While the invention has been described with reference to exemplary embodiments of an air vent provided to the front of the hood providing an influx of air into the cooking volume, past the window prior to escaping through vents positioned high at the back of the hood, it will be appreciated that modifications can be made without departing from the scope of the present teaching. What is important is that means for providing a flow of air along an inside surface of the hood proximal to the window is provided, that flow or air creating an air wash effect. In the second aspect of the invention, by providing a coupling mechanism between the side trays and the main body of the barbecue inter-engagement of the two is facilitated. While the second embodiment has been described with reference to an exemplary coupling mechanism, it will be appreciated that modifications can be made without departing from the scope of the present teaching.

It will be appreciated that it is not intended that the invention be limited in any way except as may be deemed necessary in the light of the appended claims.

The words comprises/comprising when used in this specification are to specify the presence of stated features, integers, steps or components but does not preclude the presence or addition of one or more other features, integers , steps, components or groups thereof.

## Claims

1. A bottle gas fuelled barbecue (100) comprising:
a main body portion housing a sink (110) within which a gas burner is located, the main body portion comprising a cooking portion,
first and second side trays (103) removably coupled to the main body portion;
a coupling mechanism facilitating the removable coupling of the side trays to the main body portion, and
wherein the coupling mechanism comprises projecting engagement members (220) extending downwardly from the side trays, the engagement members being configured to cooperate with corresponding receiving members (330) provided on or proximal to the main body portion, and wherein the projecting members are male members, the receiving members (330) defining co-operating female members within which the male members may be received,
wherein the coupling mechanism is configured such that operably separation of the trays (103) from the main body portion requires alignment of the engagement members (220) with the receiving members (330) by application of an upward force to the trays (103), the alignment effecting a planar separation path between the male and female members, **characterised in that**
each of the male and female members are angled inwardly towards the main body portion and the female member is angled so as to be substantially parallel with a side wall of the sink (110).

2. The barbecue of claim 1 wherein the length of the male members is greater than the length of the female members such that on inter-engagement, the male members project through the female members.

3. The barbecue of claim 1 further comprising:
a hood (120) co-operable with the sink (110) to define a cooking volume within which food may be cooked and
wherein the hood comprises a window (130), the window operably allowing a viewing of cooking food within the cooking volume, the barbecue further comprising means for providing a flow of air along an inside surface of the hood proximal to the window, the flow or air creating an air wash effect against the window,
wherein the hood (120) and sink (110) operably meet at a front portion of the barbecue, the means for providing a flow of air comprises an air access point provided at that front portion, and
wherein the hood (120) comprises at least one vent in an upper region thereof, the vent allowing an escape of air out from the cooking volume.

4. The barbecue of claim 3 wherein the hood (120) or sink (110) define a plurality of vents at the front portion to allow an ingress of air into the cooking volume.

5. The barbecue of claim 3 wherein the hood projects forwardly of the sink at the front portion of the barbecue so as to provide an air gap (140) between the two in this region.

6. The barbecue of claims 3 to 5 wherein the hood and window each comprise a curved surface

7. The barbecue of claims 3 to 6 wherein the window is coupled to the hood using an elastomeric sealant to prevent escape of air out through any gaps between surfaces of the hood (120) and the window (130).

## Patentansprüche

1. Ein mit Flaschengas betriebener Grill (100), aufweisend:
einen eine Grillwanne (110) aufnehmenden Hauptkörper, in welcher Grillwanne ein Gasbrenner platziert ist, wobei der Hauptkörper einen Kochabschnitt aufweist,
erste und zweite Seitenablagen (103), die abnehmbar an dem Hauptkörper angebracht sind;
ein Kopplungsmechanismus, der ein Ankoppeln und Abnehmen der Seitenablagen an und von dem Hauptkörper ermöglicht, und
wobei der Kopplungsmechanismus vorstehende Eingriffelemente (220) aufweist, die sich von den Seitenablagen nach unten erstrecken, wobei die Eingriffelemente für eine Kooperation mit entsprechenden Aufnahmeelementen (330) bestimmt sind, die an oder nahe zu dem Hauptkörper vorgesehen sind, und wobei die vorstehenden Elemente Stiftelemente sind, und die Aufnahmeelemente (330) kooperierende Buchsenelemente definieren, in denen die Stiftelemente aufgenommen werden können, wobei der Kopplungsmechanismus konfiguriert ist, dass eine funktionale Trennung der Seitenablagen (103) von dem Hauptkörper eine Ausrichtung der Eingriffelemente (220) mit den Aufnahmeelementen (330) durch Aufbringen einer nach oben gerichteten Kraft auf die Ablagen (103) erfordert, wobei die Ausrichtung einen planaren Trennungsweg zwischen den Steck- und Buchsenelementen bewirkt, **dadurch gekennzeichnet, dass** jedes Element der Steck- und Buchsenelemente nach innen in Richtung zum Hauptkörper abgewinkelt ist, und das Buchsenelement abgewinkelt ist, derart, dass es im Wesentlichen parallel mit einer Seitenwand der Grillwanne (110) ist.

2. Barbecue-Grill nach Anspruch 1, wobei die Länge des Stiftelements größer ist als die Länge des Buchsenelementes, derart, dass im Zustand des Eingriffs die Steckelemente durch die Buchsenelemente hindurch ragen.

3. Barbecue-Grill nach Anspruch 1, ferner aufweisend:
eine Haube (120), die mit der Grillwanne (110) zusammenwirkt, um ein Kochvolumen zu definieren, innerhalb dem Nahrungsmittel zubereitet werden können, und
wobei die Haube ein Fenster (130) aufweist, welches Fenster einen funktional Sichtblick auf das zuzubereitende Nahrungsmittel innerhalb des Kochvolumens ermöglicht, wobei der Barbecue-Grill ferner Mittel aufweist, um eine Luftströmung entlang einer Innenseitenfläche der Haube nächst zu dem Fenster zu schaffen, welche Strömung oder Luft einen Luft-Wascheffekt gegenüber dem Fenster schafft,
wobei die Haube (120) und die Grillwanne (110) sich an einem vorderen Abschnitt des Grills funktional treffen, wobei die Mittel zur Schaffung einer Luftströmung einen Luftzugangspunkt aufweisen, der an diesem Frontabschnitt ausgebildet ist, und
wobei die Haube (120) mindestens eine Belüftung in einer oberen Region hiervon aufweist, welche Belüftung einen Luft-Austritt aus dem Kochvolumen erlaubt.

4. Barbecue-Grill nach Anspruch 3, wobei die Haube (120) oder die Grillwanne (110) eine Mehrzahl an Lüftungen an dem Frontabschnitt definieren, um einen Eintritt an Luft in das Kochvolumen zu ermöglichen.

5. Barbecue-Grill nach Anspruch 3, wobei die Haube nach vorne von der Grillwanne am Frontabschnitt des Grills abragt, so dass ein Luftspalt (140) zwischen den beiden Elementen in diesem Bereich geschaffen ist.

6. Barbecue-Grill nach einem der Ansprüche 3 - 5, wobei die Haube und das Fenster jeweils eine gekrümmte Oberfläche aufweisen.

7. Barbecue-Grill nach einem der Ansprüche 3 - 6, wobei das Fenster an der Haube unter Verwendung eines elastomeren Dichtmittels fixiert ist, um einen Luftaustritt durch jegliche Zwischenräume zwischen Oberflächen der Haube (120) und dem Fenster (130) zu verhindern.

## Revendications

1. Barbecue (100) alimenté par du gaz en bouteille, comprenant :
une partie de corps principal recevant un bac (110) à l'intérieur duquel est situé un brûleur à gaz, la partie de corps principal comprenant une partie de cuisson,
des premier et second plateaux latéraux (103) couplés de manière amovible à la partie de corps principal ;
un mécanisme de couplage facilitant le couplage amovible des plateaux latéraux à la partie de corps principal, et
dans lequel le mécanisme de couplage comprend des éléments d'engagement en saillie (220) s'étendant vers le bas à partir des plateaux latéraux, les éléments d'engagement étant configurés pour coopérer avec des éléments de réception (330) correspondants agencés sur ou à proximité de la partie de corps principal, et dans lequel les éléments en saillie sont des éléments mâles, les éléments de réception (330) définissant des éléments femelles coopérant à l'intérieur desquels les éléments mâles peuvent être reçus,
dans lequel le mécanisme de couplage est configuré de sorte qu'une séparation de manière opérationnelle des plateaux (103) de la partie de corps principal nécessite un alignement des éléments d'engagement (220) avec les éléments de réception (330) par application d'une force ascendante aux plateaux (103), l'alignement réalisant un trajet de séparation plan entre les éléments mâles et femelles,
**caractérisé en ce que**
chacun des éléments mâles et femelles est incliné vers l'intérieur vers la partie de corps principal et l'élément femelle est incliné de manière à être sensiblement parallèle à une paroi latérale du bac (110).

2. Barbecue selon la revendication 1, dans lequel la longueur des éléments mâles est supérieure à la longueur des éléments femelles de sorte que lors d'un engagement mutuel, les éléments mâles font saillie à travers les éléments femelles.

3. Barbecue selon la revendication 1, comprenant en outre :
un capot (120) pouvant coopérer avec le bac (110) pour définir un volume de cuisson à l'intérieur duquel des aliments peuvent être cuisinés et
dans lequel le capot comprend une fenêtre (130), la fenêtre permettant de manière opérationnelle une visualisation des aliments en cours de cuisson à l'intérieur du volume de cuisson, le barbecue comprenant en outre des moyens pour assurer un écoulement d'air le long d'une surface intérieure du capot à proximité de la fenêtre, l'écoulement d'air créant un effet de lavage à l'air contre la fenêtre,
dans lequel le capot (120) et le bac (110) se rencontrent de manière opérationnelle sur une partie avant du barbecue, les moyens pour assurer un écoulement d'air comprenant un point d'accès d'air disposé sur cette partie avant, et
dans lequel le capot (120) comprend au moins un évent dans une région supérieure de celui-ci, l'évent permettant un échappement d'air vers l'extérieur à partir du volume de cuisson.

4. Barbecue selon la revendication 3, dans lequel le capot (120) ou le bac (110) définit une pluralité d'évents sur la partie avant pour permettre une entrée d'air dans le volume de cuisson.

5. Barbecue selon la revendication 3, dans lequel le capot fait saillie vers l'avant du bac sur la partie avant du barbecue de manière à fournir un espace d'air (140) entre les deux dans cette région.

6. Barbecue selon l'une des revendications 3 à 5, dans lequel le capot et la fenêtre comprennent chacun une surface courbe.

7. Barbecue selon l'une des revendications 3 à 6, dans lequel la fenêtre est couplée au capot en utilisant une matière d'étanchéité élastomère pour empêcher un échappement d'air vers l'extérieur à travers tout espace entre des surfaces du capot (120) et de la fenêtre (130).
